# EUROPÄISCHE PATENTSCHRIFT

(11) **EP 1 010 969 B1**
(45) Veröffentlichungstag und Bekanntmachung des Hinweises auf die Patenterteilung: **15.08.2007**
(21) Anmeldenummer: 99123266.1
(22) Anmeldetag: 29.11.1999
(51) Int. Cl.: G01D 11/28, G01D 13/28

(54) **Zeigerinstrument**
Pointer instrument
Instrument à aiguille

(30) Priorität: 15.12.1998 DE 19857860
(43) Veröffentlichungstag der Anmeldung: 21.06.2000
(73) Patentinhaber: SIEMENS AKTIENGESELLSCHAFT, 80333 München (DE)
(72) Erfinder: Noll, Heinrich, Dr., 64823 Gross-Umstadt (DE); Jansa, Frank, 60385 Frankfurt (DE)

(56) Entgegenhaltungen:
- WO-A-90/13148
- WO-A-96/09522
- DE-A- 4 410 253
- US-A- 5 739 545

## Beschreibung

Die Erfindung betrifft ein Zeigerinstrument, insbesondere für ein Kraftfahrzeug, mit einem Zeiger mit einer eine Zeigerfahne auslenkenden Zeigerwelle und mit einer drehfest mit dem Zeiger verbundenen Lichtquelle, wobei die Zeigerfahne mittels der Lichtquelle beleuchtbar ist.

Ein solches Zeigerinstrument wird heute in der Praxis des Fahrzeugbaus vielfach eingesetzt und ist somit bekannt. Dabei ist die Zeigerwelle beispielsweise als Lichtleiter ausgeführt und ermöglicht so die indirekte Beleuchtung der Zeigerfahne mittels einer rückwärtigen Lichtquelle. Andere Ausführungsformen sind bekannt, bei denen die Lichtquelle am oberen Ende der Zeigerwelle für den Betrachter nicht sichtbar angeordnet ist und unmittelbar in die Zeigerfahne einstrahlt.

WO 96/09522 A beschreibt ein Zeigerinstrument nach dem Oberbegriff des Anspruchs 1.

Nachteilig bei beiden beschriebenen Ausführungsformen eines Zeigerinstrumentes ist, dass eine gleichmäßige Beleuchtung der Zeigerfahne eine spezielle Gestaltung der Querschnittsfläche erfordert. Insbesondere ist die dem Betrachter abgewandte Unterseite der Zeigerfahne gegenüber der Schwenkebene der Zeigerfahne geneigt, so dass das einfallende Licht dort reflektiert wird und an der dem Betrachter zugewandten und im wesentlichen ebenen Oberseite der Zeigerfahne gleichmäßig austritt.

Demgegenüber sind frei geformte Zeigerfahnen grundsätzlich nur dann beleuchtbar, wenn sowohl ein gleichmäßiges Austreten eines Teils des Lichtes als auch eine Lichtleitung eines weiteren Teils des Lichtes bis zu einem Endabschnitt der Zeigerfahne durch mehrfache Reflexion im Inneren der Zeigerfahne gewährleistet wird. Dabei lassen sich in der Praxis unterschiedlich helle Abschnitte der Zeigerfahne kaum vermeiden. Ähnliche Probleme treten auch dann auf, wenn anstelle einer im wesentlichen ebenen Oberfläche der Zeigerfahne profilierte oder konturierte Formen eingesetzt werden sollen, da diese den Austritt des Lichtes behindert.

Es ist ferner aufgrund der vergleichsweise lichtschwachen Beleuchtung einer gewölbten Zeigerfahne nicht möglich, deren Anordnung auf der Rückseite einer die Anzeige abdeckenden, diffus transparenten Abdeckscheibe vorzusehen, wie dies zunehmend aufgrund spezieller Anforderungen hinsichtlich des Designs wünschenswert wäre.

Der gestalterischen Freiheit sind daher enge Grenzen gesetzt, wenn nicht eine schlechtere Ablesbarkeit und unter Umständen zugleich auch ein minderwertiges Erscheinungsbild in Kauf genommen wird.

Der Erfindung liegt das Problem zugrunde, ein Zeigerinstrument der eingangs genannten Art so zu gestalten, dass die Ablesbarkeit verbessert wird.

Dieses Problem wird erfindungsgemäß durch ein Zeigerinstrument mit den Merkmalen des Anspruchs 1 gelöst.

Erfindungsgemäß ist die Zeigerfahne an ihrem der Skala zugeneigten Ende gespreizt und schließt den angezeigten Wert zwischen zwei Armen oder innerhalb eines Ringes der Zeigerfahne ein.

Die Erfindung ist dadurch besonders günstig, dass die Zeigerfahne einen über ihre Länge unterschiedlichen Querschnitt aufweist.

Die Lichtquelle könnte hierbei räumlich ausgebildet sein. Der Zeiger ist gemäß einer vorteilhaften Weiterbildung der Erfindung jedoch besonders leicht und kompakt, wenn die Lichtquelle ein eine geringe Höhe aufweisender Flächenstrahler ist. Die Höhe liegt dabei in der Größenordnung eines Millimeters.

Besonders vorteilhaft ist hierzu eine Ausführungsform der Erfindung, bei der die Lichtquelle eine Elektrolumineszenz-Folie aufweist. Durch die geringe Dicke und die flexiblen Eigenschaften einer solchen Elektrolumineszenz-Folie lassen sich beliebig gestaltete Zeigerfahnen problemlos beleuchten, wobei die gleichmäßige Lichtabstrahlung der so ausgeführten Lichtquelle eine hohe Betriebssicherheit gewährleistet. Insbesondere können hierdurch auch großflächige Zeigerfahnen beleuchtet werden, ohne eine wesentliche Änderung des Zeigerinstrumentes vornehmen zu müssen. Die Elektrolumineszenz-Folie kann dabei sowohl an der einem Betrachter zugeneigten Oberseite der Zeigerfahne als auch an der Rückseite einer hierzu transparent ausgeführten Zeigerfahne angeordnet sein.

Die Lichtquelle ist besonders einfach zu fertigen und weist eine hohe Leuchtdichte auf, wenn sie vorteilhaft eine organische LED aufweist.

Die Lichtquelle könnte eine niederpolymere organische Verbindung aufweisen. Eine besonders günstige Weiterbildung der Erfindung ist aber dann gegeben, wenn die Lichtquelle ein elektrisch anregbares, lichtemittierendes Polymer aufweist.

Hierdurch kann eine vollflächige Beleuchtung insbesondere auch der Randbereiche der Zeigerfahne erreicht werden. Dabei sind neben einer beliebigen Farbgebung auch Segmente unterschiedlicher Farbgebung darstellbar. Das lichtemittierende Polymer ist hierzu zwischen zwei Elektroden anregbar, wobei zumindest die einem Betrachter zugeneigte Elektrode weitgehend transparent ist. Dabei eignet sich das lichtemittierende Polymer auch zur Beleuchtung der Randbereiche der Zeigerfahne, wobei zugleich das Gewicht der Zeigerfahne wesentlich reduziert werden kann.

Die Lichtquelle ist dabei als sehr flacher Flächenleuchter ausführbar. Dadurch ist auch eine flache Zeigerfahne mit geringem Gewicht und nicht sichtbaren Seitenkanten realisierbar.

Eine ein lichtemittierendes Polymer aufweisende Lichtquelle besitzt die besonderen Vorteile einer einfachen Dimmbarkeit sowie einer unkomplizierten Betreibbarkeit mit einer Gleichspannung von weniger als 12 V, vorzugsweise unter 10 V. Mit lichtemittierenden Polymeren sind zudem Leuchtdichten erreichbar, bei denen die Lichtquellenleuchtfarbe auch tagsüber, d.h. bei großer Umgebungshelligkeit, gut erkennbar ist. Aufgrund der hohen Leuchtdichte eignet sich ein solcher Zeiger auch für Black-Panel-Kombinationsinstrumente in Kraftfahrzeugen.

Besonders günstig ist es dabei auch, wenn die Zeigerfahne als eine das lichtemittierende Polymer anregende Elektrode ausgeführt ist.

Auf die hierzu metallisch ausgeführte Zeigerfahne kann dabei nach der erfolgten Formgebungen mühelos ein Polymer der gewünschten Eigenschaft aufgebracht werden. Die zweite Elektrode ist hierzu im wesentlichen transparent ausgeführt und in etwa parallel zu der Zeigerfahne auf der Oberseite der Polymerschicht angeordnet. Durch den Wegfall einer zweiten, separaten Elektrode lässt sich das Zeigergewicht weiter reduzieren.

Eine besonders effektive Gestaltung der Erfindung ist dadurch gegeben, dass die Zeigerfahne mehrere unabhängig beleuchtbare Abschnitte hat.

Hierdurch lassen sich die verschiedenen Abschnitte der Zeigerfahne optisch hervorheben und dadurch die Ablesbarkeit verbessern. Beispielsweise kann der zu einer Skala benachbarte Abschnitt eine größere Helligkeit als ein der Zeigerwelle zugeneigter Abschnitt aufweisen. Zugleich können die Abschnitte auch entsprechend der Auslenkung der Zeigerfahne ansteuerbar sein und beispielsweise bei Erreichen eines maximal zulässigen Wertes eine optisch hervortretende Signalfarbe annehmen.

Besonders günstig ist auch eine Weiterbildung, bei der mit der Lichtquelle zugleich Teilbereiche eines Zifferblattes beleuchtbar sind.

Die Ablesegenauigkeit lässt sich weiter verbessern, indem ein Teilbereich, beispielsweise die Umgebung eines angezeigten Wertes, mittels der Lichtquelle zusätzlich beleuchtet und die übrigen Werte (durch ihre relative Abdunkelung) zugleich ausgeblendet werden.

Vorteilhaft ist es, wenn auch bei großer Umgebungshelligkeit die Farbe der Lichtquelle für einen Betrachter wahrnehmbar ist, so dass der Zeiger sowohl tagsüber als auch nachts in jeweils gleicher Farbe und damit gut ablesbar erscheint.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine seitliche, teilweise geschnittene Darstellung eines erfindungsgemäßen Zeigerinstrumentes,
- Fig. 2: ein weiteres Zeigerinstrument in einer seitlichen, teilweise geschnittenen Darstellung,
- Fig. 3 - 5: weitere Ausführungsformen verschiedener Zeigerfahnen.

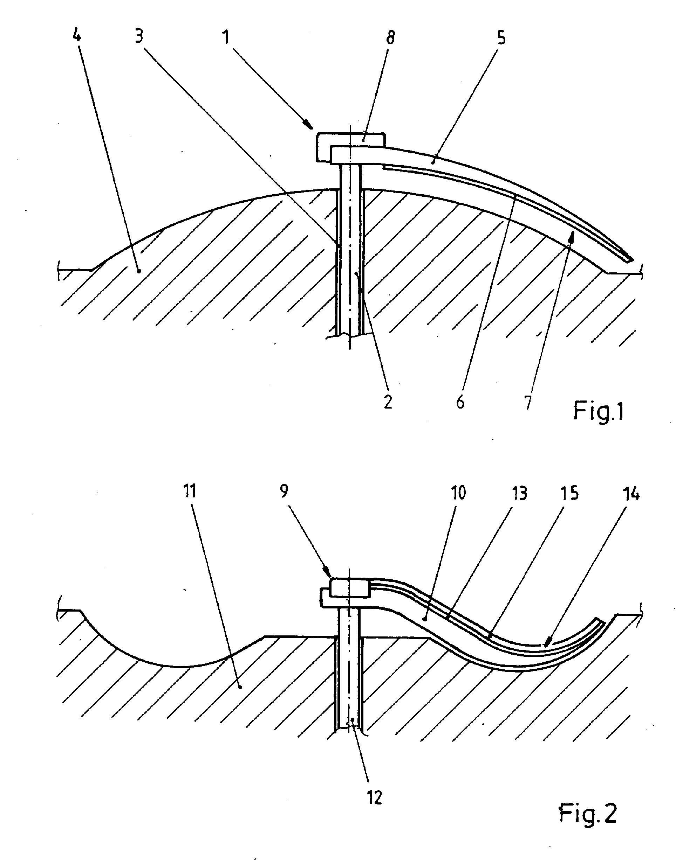

Figur 1 zeigt in einer teilweise geschnittenen Seitenansicht ein erfindungsgemäßes Zeigerinstrument 1. Das Zeigerinstrument 1 ist mit einer Zeigerwelle 2 in eine Ausnehmung 3 eines konvexen Zifferblattes 4 eingesetzt. Die Zeigerwelle 2 lenkt eine der Form des Zifferblattes 4 angepasste Zeigerfahne 5 aus, die hierzu mit geringem Abstand zu dem Zifferblatt 4 angeordnet ist. Die im wesentlichen transparent ausgeführte Zeigerfahne 5 trägt an ihrer dem Zifferblatt 4 zugeneigten Unterseite eine als Elektrolumineszenz-Folie 6 ausgeführte Lichtquelle 7, die der Kontur der Zeigerfahne 5 angepasst ist. Mittels nicht dargestellter elektrischer Kontaktierungen ist die Zeigerfahne 5 aktiv beleuchtbar, d.h. selbstleuchtend, so dass ein problemloses Ablesen des angezeigten Wertes erfolgen kann. Im Bereich der Zeigerwelle 2 ist die transparente Zeigerfahne 5 mittels einer Zeigerkappe 8 verdeckt, welche den Blick auf darunter angeordnete Bauelemente des Zeigerinstrumentes 1 versperrt. Mittels der Lichtquelle 7 ist beispielsweise zugleich die Umgebung des angezeigten Wertes auf dem Zifferblatt 4 beleuchtbar, wodurch die Ablesbarkeit weiter verbessert werden kann.

Figur 2 zeigt in einer ebenfalls teilweise geschnittenen Seitenansicht eine weitere Ausführungsform eines Zeigerinstrumentes 9. Hierbei ist eine Zeigerfahne 10 entsprechend eines konkaven Zifferblattes 11 ausgeformt und mittels einer Zeigerwelle 12 schwenkbar angeordnet. Die Zeigerfahne 10 weist eine als lichtemittierendes Polymer 13 ausgeführte Lichtquelle 14 auf, die zwischen der zugleich als Elektrode ausgeführten Zeigerfahne 10 und einer weiteren, transparent ausgeführten Elektrode 15 anregbar ist. Die einfache Formbarkeit der Lichtquelle 14 ermöglicht eine beliebige Gestaltung der Zeigerfahne 10, wobei insbesondere auch die Randbereiche der Zeigerfahne 10 beleuchtbar sind. Zudem kann die Zeigerfahne 10 in verschiedenen Abschnitten in unterschiedlichen Farben oder Helligkeiten beleuchtbar ausgeführt sein und dadurch wahlweise einen gewünschten Abschnitt optisch hervorheben.

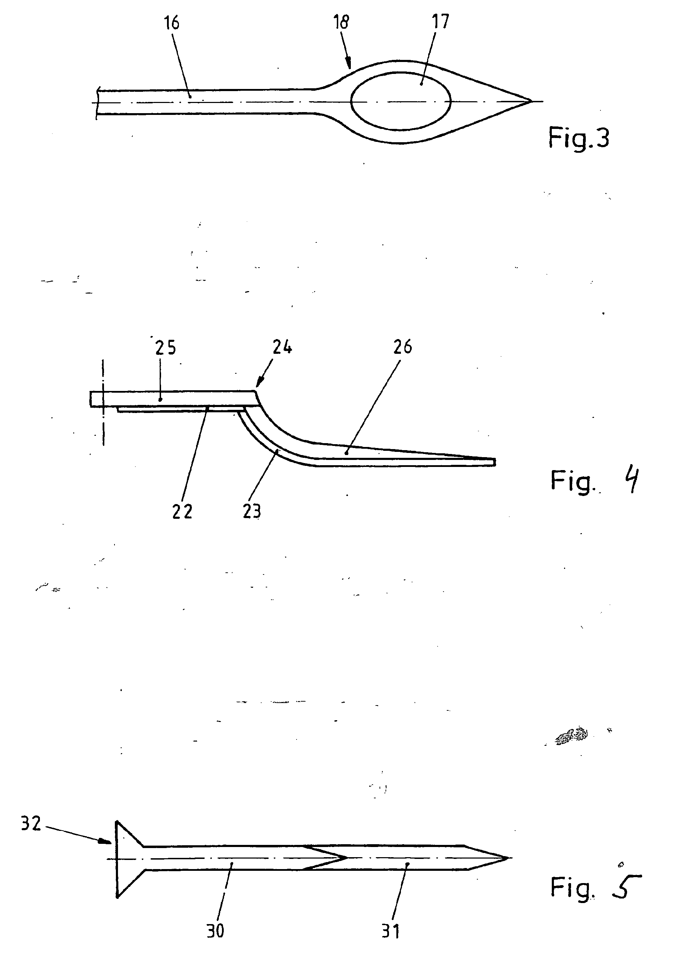

Figur 3 zeigt eine Zeigerfahne 16 mit einer eine Ausnehmung 17 einschließenden Erweiterung 18 im Bereich des Endabschnitts der Zeigerfahne 16. Die Zeigerfahne 16 ist derart ausgeführt, dass die Ziffern des angezeigten Wertes eines nicht dargestellten Zifferblattes durch die Ausnehmung 17 eingefasst und benachbarte Ziffern verdeckt sind. Das Ablesen des angezeigten Wertes ist dadurch einfach und weitgehend fehlerfrei möglich.

Eine mit zwei unterschiedlichen Elektrolumineszenz-Folien 22 und 23 beleuchtbare, transparente Zeigerfahne 24 zeigt Figur 4 in einer Seitenansicht. Die Zeigerfahne 24 weist dabei zwei in unterschiedlichen Ebenen zueinander angeordnete Abschnitte 25 und 26 auf, die jeweils mittels einer der beiden Elektrolumineszenz-Folien 22, 23 beleuchtbar sind. Durch eine verschiedenfarbige Ausführung der beiden Elektrolumineszenz-Folien 22, 23 lässt sich der äußere Abschnitt 26 optisch beispielsweise mittels einer Signalfarbe hervorheben. Möglich ist auch die Verwendung einer gemeinsamen Elektrolumineszenz-Folie 22 oder 23, wobei die Abschnitte 25, 26 der transparenten Zeigerfahne 24 eine unterschiedliche Färbung aufweisen und damit einen unterschiedlichen optischen Eindruck erzielen.

Eine weitere Ausführungsform einer in zwei Abschnitte 30, 31 unterteilten Zeigerfahne 32 zeigt Figur 5 in einer Draufsicht. Dabei weisen die beiden Abschnitte 30, 31 jeweils eine unterschiedliche Beschichtung eines lichtemittierenden Polymers auf. Zusätzlich sind weitere Abschnitte denkbar, die lediglich bei einer bestimmten Zeigerstellung angesteuert werden und so das Erreichen eines vorgegebenen Wertes visualisieren.

## Patentansprüche

1. Zeigerinstrument mit einer Skala, insbesondere für ein Kraftfahrzeug, mit einem Zeiger mit einer eine Zeigerfahne auslenkenden Zeigerwelle und mit einer drehfest mit dem Zeiger verbundenen Lichtquelle, wobei die Zeigerfahne mittels der Lichtquelle beleuchtbar ist, wobei die Kontur der Lichtquelle (7, 14) im wesentlichen entsprechend zumindest eines Abschnitts des Äußeren der Zeigerfahne (5, 10, 16, 24, 32) formbar oder geformt ist, **dadurch gekennzeichnet, dass** die Zeigerfahne (16) an ihrem der Skala zugeneigten Ende gespreizt ist und einen angezeigten Wert zwischen zwei Armen oder innerhalb eines Ringes der Zeigerfahne einschließt.

2. Zeigerinstrument nach Anspruch 1, **dadurch gekennzeichnet, dass** die Lichtquelle (7, 14) ein eine geringe Höhe aufweisender Flächenstrahler ist.

3. Zeigerinstrument nach Anspruch 1 oder 2, **dadurch gekennzeichnet, dass** die Lichtquelle (7) eine Elektrolumineszenz-Folie (6) aufweist.

4. Zeigerinstrument nach Anspruch 1 oder 2, **dadurch gekennzeichnet, dass** die Lichtquelle (14) eine organische LED aufweist.

5. Zeigerinstrument nach Anspruch 4, **dadurch gekennzeichnet, dass** die Lichtquelle (14) ein elektrisch anregbares, lichtemittierendes Polymer (13) aufweist.

6. Zeigerinstrument nach Anspruch 5, **dadurch gekennzeichnet, dass** die Zeigerfahne (10, 16, 32) als eine das lichtemittierende Polymer (13) anregende Elektrode ausgeführt ist.

7. Zeigerinstrument nach einem der vorhergehenden Ansprüche, **dadurch gekennzeichnet, dass** die Zeigerfahne (10, 16, 32) mehrere unabhängig beleuchtbare Abschnitte (25, 26, 30, 31) hat.

8. Zeigerinstrument nach einem der vorhergehenden Ansprüche, **dadurch gekennzeichnet, dass** die Zeigerfahne (10, 16, 32) einen über ihre Länge unterschiedlichen Querschnitt aufweist.

9. Zeigerinstrument nach einem der vorhergehenden Ansprüche, **dadurch gekennzeichnet, dass** mit der Lichtquelle (7, 14) zugleich Teilbereiche eines Zifferblattes (4, 11) beleuchtbar sind.

## Claims

1. Pointer instrument having a scale, especially for a motor vehicle, having a pointer with a pointer shaft that deflects a pointer flag and having a light source that is connected so as to rotate with the pointer, it being possible for the pointer flag to be illuminated by means of the light source, wherein the contour of the light source (7, 14) can be shaped or is shaped essentially to correspond to at least one portion of the outside of the pointer flag (5, 10, 16, 24, 32), **characterized in that** the pointer flag (16) is spread at its end inclined toward the scale, and encloses the indicated value between two arms or within a ring on the pointer flag.

2. Pointer instrument according to Claim 1, **characterized in that** the light source (7, 14) is a flat radiator having a low height.

3. Pointer instrument according to Claim 1 or 2, **characterized in that** the light source (7) has an electroluminescent film (6).

4. Pointer instrument according to Claim 1 or 2, **characterized in that** the light source (14) has an organic LED.

5. Pointer instrument according to Claim 4, **characterized in that** the light source (14) has an electrically excitable, light-emitting polymer (13).

6. Pointer instrument according to Claim 5, **characterized in that** the pointer flag (10, 16, 32) is designed as an electrode that excites the light-emitting polymer (13).

7. Pointer instrument according to one of the preceding claims, **characterized in that** the pointer flag (10, 16, 32) has a number of portions (25, 26, 30, 31) that can be illuminated independently.

8. Pointer instrument according to one of the preceding claims, **characterized in that** the pointer flag (10, 16, 32) has a cross section that differs over its length.

9. Pointer instrument according to one of the preceding claims, **characterized in that** the light source (7, 14) can be used simultaneously to illuminate subareas of a dial (4, 11).

## Revendications

1. Instrument à aiguille comportant une échelle graduée, notamment pour véhicule automobile, comportant une aiguille avec un arbre qui fait dévier une palette et avec une source lumineuse liée en blocage de rotation à l'aiguille, la palette de l'aiguille pouvant être éclairée par la source lumineuse, le contour de la source lumineuse (7, 14) pouvant être façonné ou étant façonné, pour l'essentiel, en fonction de au moins une section de l'extérieur de la palette d'aiguille (5, 10, 16, 24, 32), **caractérisé par le fait que** la palette d'aiguille (16) est élargie à son extrémité tournée vers l'échelle graduée et enferme une valeur affichée entre deux bras ou à l'intérieur d'un anneau de la palette d'aiguille.

2. Instrument à aiguille selon la revendication 1, **caractérisé par le fait que** la source lumineuse (7, 14) est un projecteur en nappe ayant une faible hauteur.

3. Instrument à aiguille selon la revendication 1 ou 2, **caractérisé par le fait que** la source lumineuse (7) comporte un film électroluminescent (6).

4. Instrument à aiguille selon la revendication 1 ou 2, **caractérisé par le fait que** la source lumineuse (14) comporte une diode électroluminescente organique.

5. Instrument à aiguille selon la revendication 4, **caractérisé par le fait que** la source lumineuse (14) comporte un polymère luminescent (13) pouvant être excité électriquement.

6. Instrument à aiguille selon la revendication 5, **caractérisé par le fait que** la palette d'aiguille (10, 16, 32) est exécutée sous forme d'électrode excitant le polymère luminescent (13).

7. Instrument à aiguille selon l'une des revendications précédentes, **caractérisé par le fait que** la palette d'aiguille (10, 16, 32) a plusieurs sections (25, 26, 30, 31) pouvant être éclairées indépendamment.

8. Instrument à aiguille selon l'une des revendications précédentes, **caractérisé par le fait que** la palette d'aiguille (10, 16, 32) a une section transversale variable sur sa longueur.

9. Instrument à aiguille selon l'une des revendications précédentes, **caractérisé par le fait que** des parties d'un cadran (4, 11) peuvent être éclairées en même temps par la source lumineuse (7, 14).
